# EUROPEAN PATENT APPLICATION

(11) **EP 4 621 966 A1**
(43) Date of publication of application: **24.09.2025**
(21) Application number: 22966407.3
(22) Date of filing: 29.12.2022
(51) Int. Cl.: H01M 50/342

(54) **THERMAL SAFETY BATTERY PACK, BATTERY SYSTEM, AND ELECTRICAL DEVICE**

(30) Priority: 21.11.2022 CN 202223120462 U
(71) Applicant: Eve Power Co., Ltd., Jingmen, Hubei 448000 (CN)
(72) Inventor: LIU, Pan, Jingmen, Hubei 448000 (CN); WANG, Zhengrong, Jingmen, Hubei 448000 (CN); LIU, Huajun, Jingmen, Hubei 448000 (CN)
(74) Representative: Prinz & Partner mbB
(86) International application number: PCT/CN2022/143165
(87) International publication number: WO 2024/108728

(57) **Abstract**

Provided is a thermal safety battery pack, relating to the field of batteries, particularly a thermal safety battery pack. The thermal safety battery pack includes a casing and a top cover. A battery module is disposed in the casing. A thermal runaway guide member is disposed between the top cover and the battery module. A pressure relief gap is formed between the thermal runaway guide member and the top cover. The thermal runaway guide member is provided with a pressure relief portion at a position corresponding to a battery cell pressure relief valve. The pressure relief portion is provided with a protective member. The protective member is configured to be at least partially separated from the pressure relief portion during thermal runaway. Also provided are a battery system and an electrical device.

## Description

### CROSS-REFERENCE TO RELATED APPLICATIONS

The present application claims priority to Chinese Patent Application No. 202223120462.6 filed with the China National Intellectual Property Administration (CNIPA) on Nov. 21, 2022, the disclosure of which is incorporated herein by reference in its entirety.

### TECHNICAL FIELD

The present application relates to the field of batteries, particularly a thermal safety battery pack, a battery system, and an electrical device.

### BACKGROUND

With the increasing application of battery technology in daily life, the safety performance of batteries has received more and more attention. One of the main causes of battery safety problems is thermal runaway. Thermal runaway occurs primarily due to various chemical reactions inside a battery cell that generate a large amount of gas. If the high-temperature and high-pressure gas is not released in time, the internal pressure of the cell rises abnormally, ultimately leading to the explosion of the cell or affects the temperature of adjacent cells, causing safety problems to the battery pack.

In the related art, a square power battery system uses individual battery cells stacked in the thickness direction to form a battery module. Battery modules are arranged in a battery casing to form a battery pack. To achieve thermal safety control on the individual battery cells, each battery cell is equipped with a pressure relief valve on the top of the battery cell. When the internal pressure of the battery cell becomes too high, the high-temperature and high-pressure gas inside the cell opens the pressure relief valve to release the pressure. However, above the battery module is the top cover of the battery pack. The rapid discharge of high-temperature and high-pressure gas directly hits the top cover. The square power battery system of the related art generally uses a steel top cover to directly resist the high-temperature and high-pressure gas from the thermal runaway of the battery cell. This not only increases the costs of insulation protection but also makes it easy for substances ejected from the thermal runaway of the cell to rebound to other cells or the busbar after hitting the top cover, leading to electrical connection failures.

Therefore, it is urgent to provide a solution to address the problem in related art where a battery pack uses a steel top cover to directly resist high-temperature and high-pressure gas from the thermal runaway of a battery cell, and substances ejected from the thermal runaway of the cell is prone to rebound after hitting the top cover and cause electrical connection failures.

### SUMMARY

An object of the present application is to provide a thermal safety battery pack, a battery system, and an electrical device to address the problem that an existing battery pack uses a steel top cover to directly resist high-temperature and high-pressure airflow substance that is generated by the thermal runaway of a battery cell, rebounds after hitting the top cover, and causes electrical connection failures.

In a first aspect, an embodiment of the present application provides a thermal safety battery pack. The thermal safety battery pack includes a casing and a top cover. Battery modules are disposed in the casing. A thermal runaway guide member is disposed between the top cover and the battery module. A pressure relief gap is formed between the thermal runaway guide member and the top cover. The thermal runaway guide member is provided with a pressure relief portion at a position corresponding to a battery cell pressure relief valve. The pressure relief portion is provided with protective members. A protective member of the protective members is configured to be at least partially separated from the pressure relief portion during thermal runaway.

In the thermal safety battery pack of the present application, a pressure relief gap is formed by the thermal runaway guide member so that the high-temperature and high-pressure airflow substance outputted from the battery cell pressure relief valve must first impact the thermal runaway guide member before entering the pressure relief gap. The high-temperature and high-pressure airflow substance is finally guided and outputted in the gap. Combined with the unidirectional shielding function of the protective member, the airflow substance does not rebound after impacting the top cover, avoiding electrical connection failures in other parts of the casing. Moreover, the thermal runaway guide member also provides thermal insulation, preventing high temperature from affecting other battery cells or battery modules in the casing, reducing heat diffusion, and improving the safety performance of the battery pack.

In an embodiment, a heat shield is disposed on the inner side of the top cover facing the casing, and the heat shield at least vertically faces the pressure relief portion. The heat shield replaces the top cover to resist the high-temperature and high-pressure airflow substance outputted from the battery cell pressure relief valve, thereby reducing the design requirements for the top cover, allowing the use of non-steel material, and lowering the insulation protection costs of the top cover. Moreover, the heat shield can buffer the high-temperature and high-pressure airflow substance, reducing the impact of the high-temperature and high-pressure airflow substance on other areas of the battery pack and better preventing thermal runaway.

In an embodiment, the distance between the heat shield and the thermal runaway guide member is greater than or equal to 1 mm, providing sufficient flow space for the high-temperature airflow substance.

In an embodiment, in the thickness direction of the casing, the orthogonal projection of the heat shield covers at least one pressure relief portion. The coverage range of the heat shield can be adjusted according to the actual situation.

In an embodiment, the heat shield includes a mica board, a ceramic-silicone rubber fiberglass composite structure, or a fire-resistant coating spray-formed piece. The heat shield is connected to the top cover by a structural adhesive, a double-sided adhesive, hot press, or in other manners.

In an embodiment, the top cover includes a composite material structure member, achieving insulation of the top cover and avoiding the insulation protection costs of a steel top cover.

In an embodiment, the thermal runaway guide member is configured as a plate-shaped structure member, and the thermal runaway guide member covers all the battery modules in the casing, ensuring the continuity of the pressure relief gap and preventing the airflow substance from falling back and affecting adjacent battery cells or modules.

In an embodiment, the thermal runaway guide member is configured as multiple plate-shaped structure members, each thermal runaway guide member covers one or more battery modules in the casing, and adjacent thermal runaway guide members are spliced together, ensuring the continuity of the pressure relief gap and preventing the airflow substance from falling back to between adjacent battery modules after impacting the heat shield.

In an embodiment, the thermal runaway guide member is spaced from the battery cell pressure relief valve, creating a gap space between the thermal runaway guide member and the battery cell pressure relief valve, providing an acceleration space for airflow substance ejection through the gap space, and allowing the airflow substance to smoothly pass through the pressure relief portion into the pressure relief gap.

In an embodiment, the pressure relief portion includes pressure relief holes corresponding to the battery cell pressure relief valves, the protective member is connected to the thermal runaway guide member, and the protective member is configured to cover one or more pressure relief holes. Pressure relief holes correspond one-to-one with battery cell pressure relief valves, or one pressure relief hole corresponds to one or more battery cell pressure relief valves.

In an embodiment, the pressure relief portion includes exhaust regions corresponding to the battery cell pressure relief valves, and the protective member is configured as a blade structure or a thinned structure disposed in an exhaust region of the exhaust regions, enabling the protective member to open smoothly under the impact of high-temperature and high-pressure airflow substance, forming a unidirectional gate structure, and achieving unidirectional shielding of the pressure relief portion.

In an embodiment, the thermal runaway guide member includes a mica board or a ceramic-silicone rubber fiberglass composite structure.

In an embodiment, the casing is provided with a pressure relief mechanism and a sensor, the pressure relief mechanism communicates with the pressure relief gap, the sensor is associated with a liquid cooling mechanism, and the liquid cooling mechanism is thermally connected to the casing, guiding the airflow substance from the pressure relief gap to the pressure relief mechanism for output and preventing the high-temperature and high-pressure airflow substance from remaining in the casing. Additionally, the sensor, the battery management system, and the liquid cooling mechanism form an active cooling structure. When the parameters collected by the sensor exceed the set value, active cooling is promptly performed to prevent thermal runaway.

In a second aspect, an embodiment of the present application provides a battery system. The battery system includes a battery management system and the preceding thermal safety battery pack. The battery management system is communicatively connected to the liquid cooling mechanism of the thermal safety battery pack.

In another aspect, an embodiment of the present application provides a battery system using the preceding thermal safety battery pack. The heat shield resists the high-temperature and high-pressure airflow substance outputted from the battery cell pressure relief valve, thereby reducing the design requirements for the top cover. The pressure relief gap guides the output of the high-temperature and high-pressure airflow substance, preventing the airflow substance from falling back and causing electrical connection failures. The thermal runaway guide member provides thermal insulation. The battery management system can use signals from the sensor to timely control the liquid cooling mechanism to work to cool the battery module, better reducing the likelihood of heat diffusion and improving the safety performance of the battery system.

An electrical device includes an electrical body and the preceding thermal safety battery pack. The electrical body includes a vehicle.

The electrical device of the present application uses the preceding thermal safety battery pack, reducing the costs and improving the safety during use.

In summary, due to the use of the preceding solution, the beneficial effects of the thermal safety battery pack of the present application are:
1. A pressure relief gap is formed by the thermal runaway guide member so that the high-temperature and high-pressure airflow substance outputted from the battery cell pressure relief valve must first impact the thermal runaway guide member before entering the pressure relief gap. The high-temperature and high-pressure airflow substance is finally guided and outputted in the gap. Combined with the unidirectional shielding function of the protective member, the airflow substance does not rebound after impacting the top cover, avoiding electrical connection failures in other parts of the casing.
2. The thermal runaway guide member also provides thermal insulation, preventing high temperature from affecting other battery cells or battery modules in the casing, reducing heat diffusion, and improving the safety performance of the battery pack.

The battery system of the present application has the following beneficial effects:
In the preceding thermal safety battery pack, the output of the high-temperature and high-pressure airflow substance is guided through the pressure relief gap, preventing the airflow substance from falling back and causing electrical connection failures. The thermal runaway guide member provides thermal insulation. The battery management system can use signals from the sensor to timely control the liquid cooling mechanism to work to cool the battery module, better reducing the likelihood of heat diffusion and improving the safety performance of the battery system.

The electrical device of the present application has the following beneficial effects:

The preceding thermal safety battery pack leads to lower costs and improves the safety during use.

### BRIEF DESCRIPTION OF DRAWINGS

FIG. 1 is an exploded view of a thermal safety battery pack according to the present application.
FIG. 2 is a perspective view of a thermal safety battery pack according to the present application.
FIG. 3 is a top view of a thermal safety battery pack according to the present application.
FIG. 4 is a structural diagram view of section A-A of FIG. 3.
FIG. 5 is a structural diagram view of a battery module according to the present application.
FIG. 6 is a structural diagram view of a thermal runaway guide member according to the present application.
FIG. 7 is a top view of a thermal runaway guide member according to the present application.
FIG. 8 is a structural diagram view of a thermal runaway guide member according to embodiment five.
FIG. 9 illustrates the usage state of a thermal runaway guide member according to embodiment one.
FIG. 10 illustrates the usage state of a thermal runaway guide member according to embodiment two.
FIG. 11 is a structural diagram view of a thermal runaway guide member according to embodiment three.
FIG. 12 illustrates the usage state of a thermal runaway guide member according to embodiment three.
FIG. 13 is a structural diagram view of a top cover according to the present application.
FIG. 14 is an exploded view of a thermal safety battery pack according to embodiment seven.

### Reference list:

1. casing, 2. top cover, 3. battery module, 31. frame component, 32. battery cell, 321. battery cell pressure relief valve, 322. pole, 33. structure portion, 4. thermal runaway guide member, 41. pressure relief portion, 42. protective member, 5. pressure relief gap, 6. heat shield, 7. pressure relief mechanism, 8. sensor, 9. liquid cooling mechanism

### DETAILED DESCRIPTION

The following describes the present application in detail in conjunction with drawings.

### Embodiment one

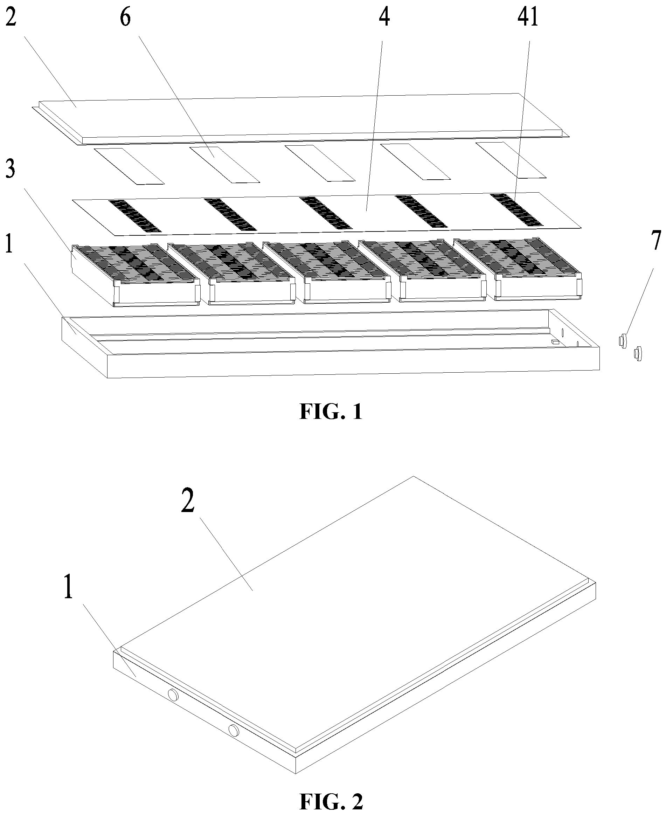

As shown in FIG. 1 to FIG. 5, the thermal safety battery pack of this embodiment includes a casing 1 and a top cover 2. Battery modules 3 are disposed in the casing 1. A thermal runaway guide member 4 is disposed between the battery module 3 and the top cover 2. A pressure relief gap 5 is formed between the thermal runaway guide member 4 and the top cover 2. The thermal runaway guide member 4 is provided with a pressure relief portion 41 at the position corresponding to the battery cell pressure relief valve 321. The pressure relief portion 41 is provided with protective members 42. A protective member of the protective members 42 is configured to be at least partially separated from the pressure relief portion 41 during thermal runaway.

The thermal safety battery pack of this embodiment has the casing 1 and top cover 2 combined to form an accommodating space for one or more battery modules 3. The battery module 3 includes several battery cells 32 arranged in sequence. Each battery cell 32 has positive and negative poles 322 arranged on the top of the battery cell 32. The battery cell pressure relief valve 321 is positioned between the positive and negative poles 322 and at the center of the top surface of the battery cell 32. The thermal runaway guide member 4 is a plate-shaped structure member that covers the top of the battery module 3. The pressure relief gap 5 is formed between the thermal runaway guide member 4 and the top cover 2. When a single battery cell 32 undergoes thermal runaway, the high-temperature and high-pressure airflow substance expelled from the battery cell 32 directly impacts the pressure relief portion 41 of the thermal runaway guide member 4, causing the protective member 42 to at least partially separate from the pressure relief portion 41. The high-temperature and high-pressure airflow substance passes through the pressure relief portion 41 into the pressure relief gap 5 and is guided out through the gap. This prevents the airflow substance from directly impacting the top cover 2 and, through the unidirectional shielding function of the protective member 42, prevents the airflow substance from rebounding and affecting other battery cells 32 or battery modules 3 in the casing 1 or causing electrical connection failures. Additionally, the thermal runaway guide member 4 also provides thermal insulation, reducing heat diffusion and improving the safety performance of the battery pack.

In some embodiments, the thermal runaway guide member 4 is positioned over the positive and negative poles 322. Since the top surface of the pole 322 is higher than the battery cell pressure relief valve 321, a gap space is formed between the thermal runaway guide member 4 and the battery cell pressure relief valve 321, providing an acceleration space for the high-temperature and high-pressure airflow substance to be expelled from the battery cell 32 and ensuring that the airflow substance passes smoothly through the pressure relief portion 41.

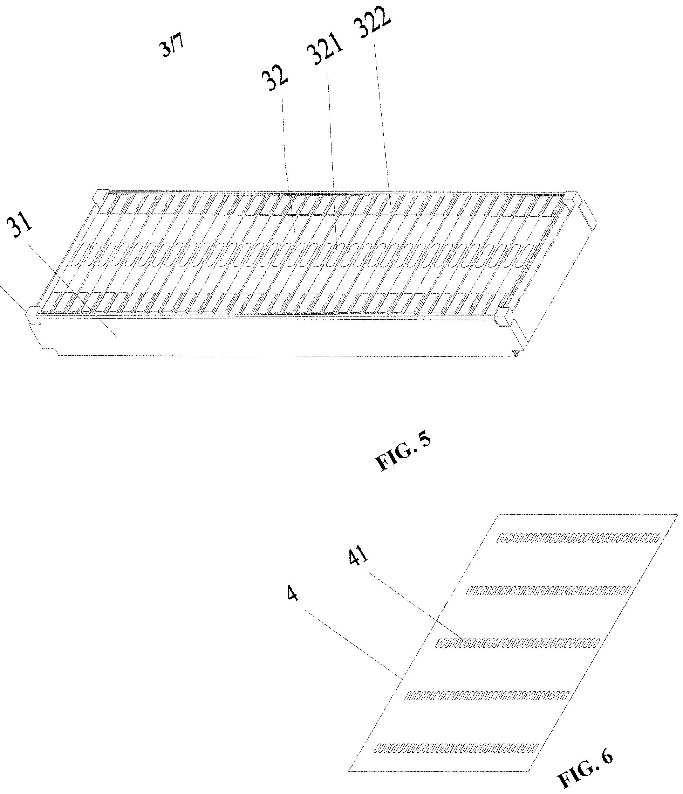

As shown in FIG. 5, in this embodiment, the battery module 3 is configured to include a frame component 31 and several battery cells 32 arranged within the frame component 31. The frame component 31 is provided with/connected to a structure portion 33 that is higher than the battery cell pressure relief valve 321. The thermal runaway guide member 4 is positioned over the top surface of the structure portion 33. The frame component 31 provides circumferential restraint and positioning for the multiple arranged battery cells 32 and supports the thermal runaway guide member 4 to form the gap space.

In this embodiment, the thermal runaway guide member 4 is made of a mica board. As shown in FIG. 6 to FIG. 9, preferably, the thermal runaway guide member 4 made of a mica board is provided with pressure relief holes at the position corresponding to the battery cell pressure relief valves. The pressure relief hole is connected to a protective member 42 made of mica paper. The protective member 42 made of mica paper is adhesively or thermally connected to the side of the thermal runaway guide member 4 facing the top cover 2 to shield the pressure relief hole.

Preferably, pressure relief holes correspond one-to-one with battery cell pressure relief valves, or one pressure relief hole corresponds to one or more battery cell pressure relief valves, and a single protective member 42 made of mica paper covers one or more pressure relief holes.

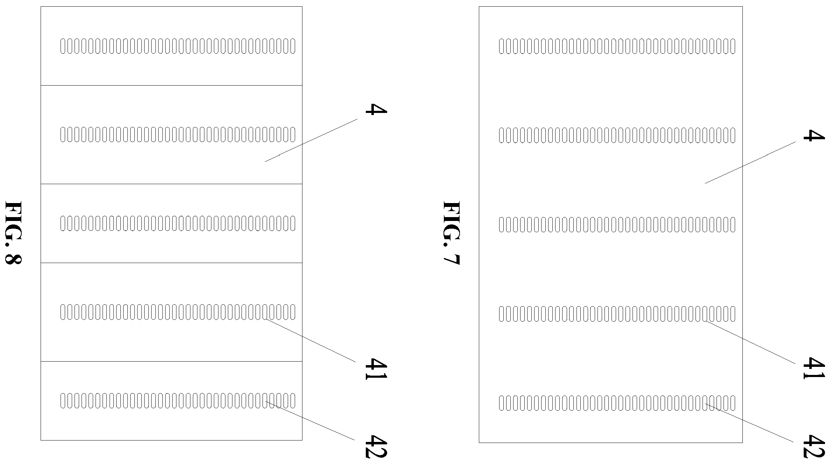

As shown in FIG. 7, the pressure relief holes correspond one-to-one with the battery cell pressure relief valves, and each pressure relief hole is provided with a protective member 42. This ensures that when thermal runaway occurs, each battery cell pressure relief valve can independently guide the output of the high-temperature and high-pressure airflow substance, and the expelled substance does not fall back to affect other normal battery cells.

Preferably, the thickness of the thermal runaway guide member made of a mica board 4 is 0.8 mm to 2 mm, and the thickness of the protective member 42 made of mica paper is 0.2 mm to 0.3 mm.

### Embodiment two

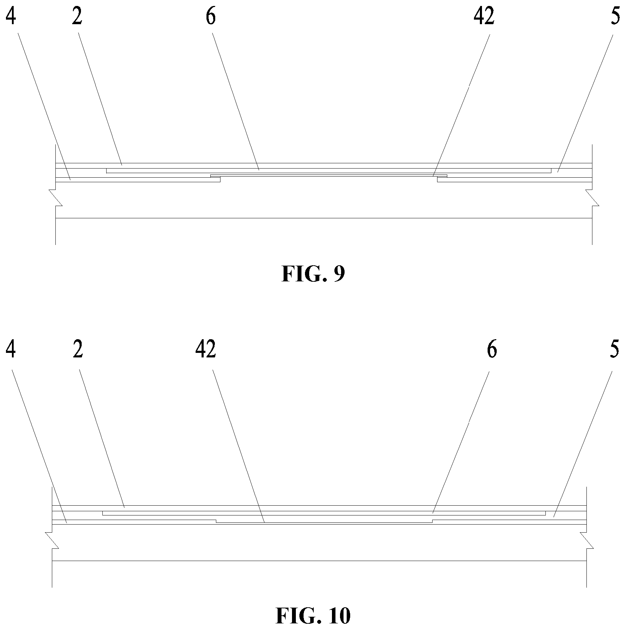

As shown in FIG. 10, the thermal safety battery pack of this embodiment is structurally similar to that of embodiment one, with the difference being that the thermal runaway guide member 4 made of a mica board has a thinned structure at the position corresponding to the battery cell pressure relief valve.

In the thermal safety battery pack of this embodiment, the protective member 42 and the thermal runaway guide member 4 are integrally formed as a single piece, and a thinned structure is formed on the thermal runaway guide member 4 made of a mica board through mechanical processing to form the protective member 42 to constitute the exhaust region covered by the thinned structure. During use, the thinned structure can be broken by the impact of the airflow substance, allowing the airflow substance to enter the pressure relief gap 5.

### Embodiment three

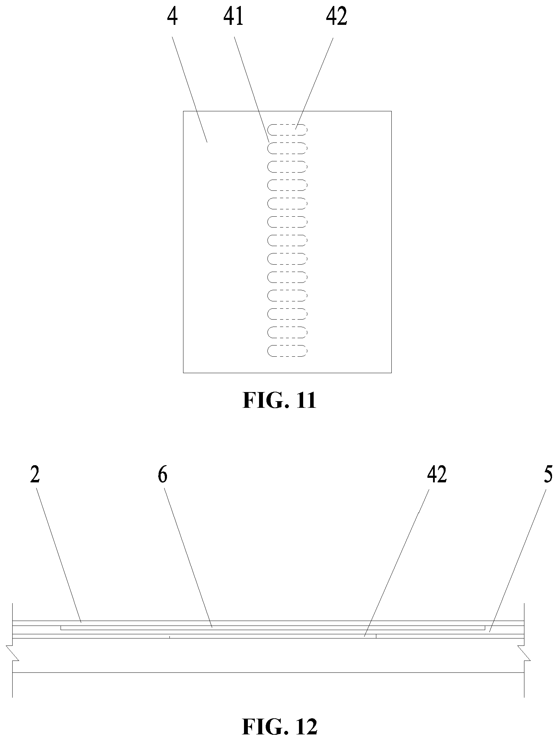

As shown in FIG. 11 and 12, the thermal safety battery pack of this embodiment is structurally similar to that of embodiment one, with the difference being that the thermal runaway guide member 4 is a ceramic-silicone rubber fiberglass composite structure, that is, a composite structure of ceramic silicone rubber and fiberglass cloth. A notch is cut at the position corresponding to the battery cell pressure relief valve, forming a blade structure that can open unidirectionally under the impact of airflow. During use, the blade structure can open under the impact of airflow, allowing the airflow substance to enter the pressure relief gap 5.

### Embodiment four

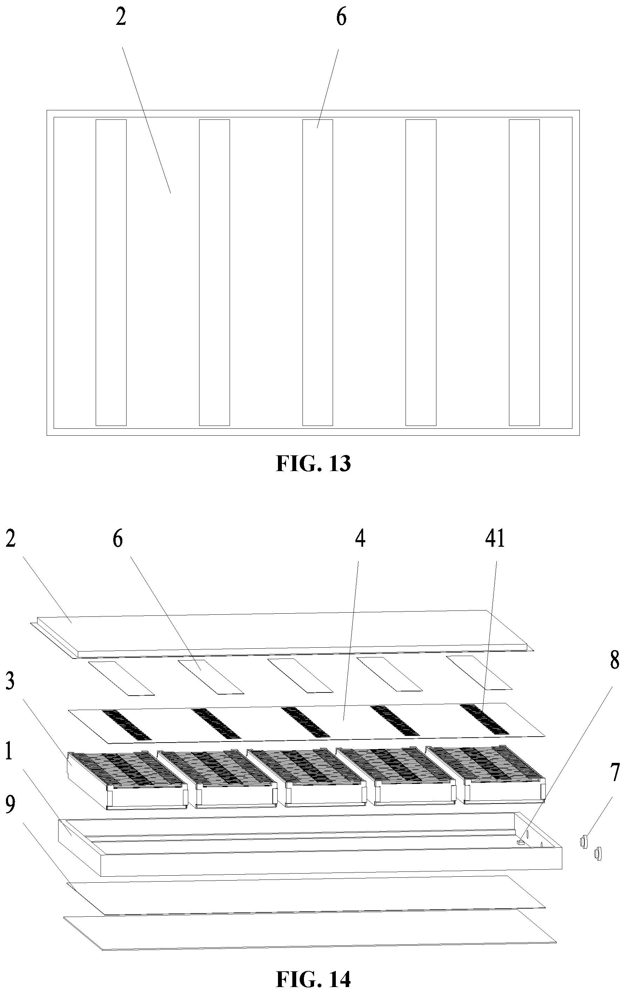

As shown in FIG. 1 and FIG. 14, based on embodiment one, in the thermal safety battery pack of this embodiment, the thermal runaway guide member 4 is configured as a plate-shaped structure member and covers all the battery modules 3 in the casing 1.

In the thermal safety battery pack of this embodiment, the thermal runaway guide member 4 has a coverage area equivalent to that of the top cover 2. A complete and through pressure relief gap 5 is formed between the thermal runaway guide member 4 and the top cover 2, effectively preventing the airflow substance from falling back into the gap between adjacent battery modules 3 or causing electrical connection failures at other positions.

### Embodiment five

Based on embodiment one, in the thermal safety battery pack of this embodiment, the thermal runaway guide member 4 is configured as multiple plate-shaped structure members, with each thermal runaway guide member 4 covering one or more battery modules 3, and adjacent thermal runaway guide members 4 being spliced together.

As shown in FIG. 8, in the thermal safety battery pack of this embodiment, multiple thermal runaway guide members 4 are spliced together, enhancing the assembly flexibility of the thermal safety battery pack. A complete and through pressure relief gap 5 is formed between the thermal runaway guide member 4 and the top cover 2, ensuring the continuity of the pressure relief gap 5 and preventing the airflow substance from falling back into between adjacent battery modules 3 or causing electrical connection failures at other positions.

### Embodiment six

As shown in FIG. 1 and FIG. 13, a heat shield 6 is disposed on the inner side of the top cover 2 facing the casing 1, and the heat shield 6 at least vertically faces the pressure relief portion 41.

In the thermal safety battery pack of this embodiment, the heat shield 6 on the top cover 2 resists the high-temperature and high-pressure airflow substance outputted from the battery cell pressure relief valve, thereby reducing the design requirements for the top cover 2, allowing the use of non-steel material, and lowering the insulation protection costs of the top cover 2. Moreover, the heat shield 6 can buffer the high-temperature and high-pressure airflow substance, reducing the impact of the high-temperature and high-pressure airflow substance on other areas of the battery pack and better preventing thermal runaway.

Preferably, the heat shield 6 includes a mica board, a ceramic-silicone rubber fiberglass composite structure, or a fire-resistant coating spray-formed piece. The heat shield 6 may also be other heat-resistant structures according to the actual situation. Preferably, the heat shield 6 is connected to the top cover 2 by a structural adhesive, a double-sided adhesive, hot press, or in other manners.

Preferably, in the thickness direction of the casing 1, the orthogonal projection of the heat shield 6 covers at least one pressure relief portion 41.

As shown in FIGS. 1, 13, and 14, this embodiment is explained using an example where the orthogonal projection of the heat shield 6 covers one battery module 3. The heat shield 6 is preferably a mica board that is heat-pressed onto the side of the top cover 2 facing the inner side of the casing 1 to cover and shield multiple pressure relief portions 41 on one battery module 3. When thermal runaway occurs, high-temperature and high-pressure airflow substance passes through the pressure relief portion 41, impacts the heat shield 6, and then flows out along the pressure relief gap 5. The heat shield 6 replaces the original steel top cover 2 to directly withstand the impact of the high-temperature and high-pressure airflow substance, thereby reducing the design requirements for the top cover 2, allowing the use of the top cover 2 made of composite material, and lowering the insulation protection costs of the top cover 2.

Preferably, the top cover 2 is made of PCM composite material that can withstand temperatures from 400°C to 500°C.

Preferably, the distance between the heat shield 6 and the thermal runaway guide member 4 is greater than or equal to 1 mm, providing sufficient space for flowing of the high-temperature airflow substance.

### Embodiment seven

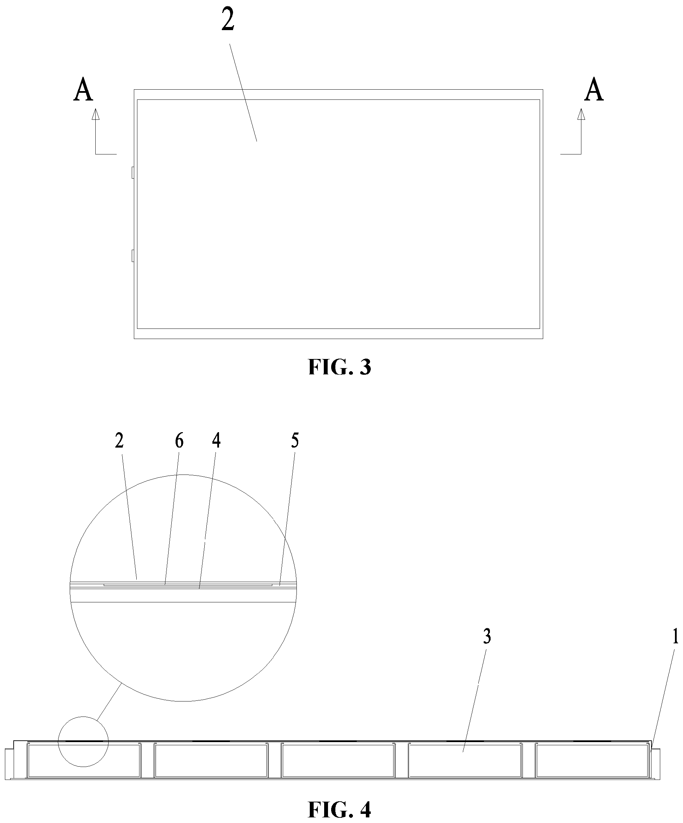

As shown in FIG. 4 and FIG. 14, in the thermal safety battery pack of this embodiment, the casing 1 is provided with a pressure relief mechanism 7 and a sensor 8. The pressure relief mechanism 7 communicates with the pressure relief gap 5. The sensor 8 is associated with the liquid cooling mechanism 9. The liquid cooling mechanism 9 is thermally connected to the casing 1.

In the thermal safety battery pack of this embodiment, the pressure relief mechanism 7 includes a pressure relief valve disposed on the sidewall of the casing 1. The sensor 8 includes a pressure sensor adjacent to the pressure relief valve. The liquid cooling mechanism 9 includes a liquid cooling plate located between the bottom of the casing 1 and the battery module 3. During use, the pressure sensor continuously monitors the pressure changes near the pressure relief valve. Based on the temperature tolerance threshold of the pressure sensor or the set pressure gradient, the signal serves as a trigger signal to activate the liquid cooling mechanism 9, achieving timely active cooling when high-temperature and high-pressure airflow substance is output, thus minimizing the occurrence of thermal runaway.

### Embodiment eight

A battery system includes a battery management system and a thermal safety battery pack as shown in FIG. 1 to FIG. 14. The battery management system is communicatively connected to the sensor 8 of the thermal safety battery pack and is control-connected to the liquid cooling mechanism 9 of the thermal safety battery pack.

In this embodiment, in the battery system that uses the thermal safety battery pack of any one of embodiments 1 to 7, the pressure relief gap 5 guides the output of the high-temperature and high-pressure airflow substance, preventing the airflow substance from falling back and causing electrical connection failures. The thermal runaway guide member 4 provides thermal insulation. The battery management system can use signals from the sensor 8 to timely control the liquid cooling mechanism 9 to work to cool the battery module 3, better reducing the likelihood of heat diffusion and improving the safety performance of the battery system.

### Embodiment nine

An electrical device includes an electrical body and the preceding thermal safety battery pack.

In the electric device of this embodiment, the electric body includes, but is not limited to, a vehicle, a ship, or an aircraft. Any one thermal safety battery pack in embodiments 1 to 7 can reduce the costs of the electric body and improve the safety during use.

## Claims

1. A thermal safety battery pack, comprising a casing (1) and a top cover (2), wherein battery modules (3) are disposed in the casing (1), a thermal runaway guide member (4) is disposed between the top cover (2) and the battery modules (3), a pressure relief gap (5) is formed between the thermal runaway guide member (4) and the top cover (2), the thermal runaway guide member (4) is provided with a pressure relief portion (41) at a position corresponding to battery cell pressure relief valves (321), the pressure relief portion (41) is provided with protective members (42), and a protective member (42) of the protective members (42) is configured to be at least partially separated from the pressure relief portion (41) during thermal runaway.

2. The thermal safety battery pack of claim 1, wherein a heat shield (6) is disposed on an inner side of the top cover (2) facing the casing (1), and the heat shield (6) at least vertically faces the pressure relief portion (41).

3. The thermal safety battery pack of claim 2, wherein a distance between the heat shield (6) and the thermal runaway guide member (4) is greater than or equal to 1 mm.

4. The thermal safety battery pack of claim 2, wherein in a thickness direction of the casing (1), an orthogonal projection of the heat shield (6) covers at least one pressure relief portion (41).

5. The thermal safety battery pack of any one of claims 2 to 4, wherein the heat shield (6) comprises a mica board, a ceramic-silicone rubber fiberglass composite structure, or a fire-resistant coating spray-formed piece, and the heat shield (6) is connected to the top cover (2).

6. The thermal safety battery pack of claim 5, wherein the top cover (2) comprises a composite material structure member.

7. The thermal safety battery pack of claim 1, wherein the thermal runaway guide member (4) is configured as a plate-shaped structure member, and the thermal runaway guide member (4) covers all the battery modules (3).

8. The thermal safety battery pack of claim 1, wherein the thermal runaway guide member (4) is configured as multiple plate-shaped structure members, each thermal runaway guide member (4) covers one or more battery modules (3) of the battery modules (3), and adjacent thermal runaway guide members (4) are spliced together.

9. The thermal safety battery pack of claim 7 or 8, wherein the thermal runaway guide member (4) is spaced apart from the battery cell pressure relief valves (321).

10. The thermal safety battery pack of claim 1, wherein the pressure relief portion (41) comprises pressure relief holes corresponding to the battery cell pressure relief valves (321), the protective member (42) is connected to the thermal runaway guide member (4), and the protective member (42) is configured to cover one or more pressure relief holes of the pressure relief holes.

11. The thermal safety battery pack of claim 1, wherein the pressure relief portion (41) comprises exhaust regions corresponding to the battery cell pressure relief valves, and the protective member (42) is configured as a blade structure or a thinned structure disposed in an exhaust region of the exhaust regions.

12. The thermal safety battery pack of claim 1, wherein the thermal runaway guide member (4) comprises a mica board or a ceramic-silicone rubber fiberglass composite structure.

13. The thermal safety battery pack of claim 1, wherein the casing (1) is provided with a pressure relief mechanism (7) and a sensor (8), the pressure relief mechanism (7) communicates with the pressure relief gap (5), the sensor (8) is associated with a liquid cooling mechanism (9), and the liquid cooling mechanism (9) is thermally connected to the casing (1).

14. A battery system, comprising a battery management system and the thermal safety battery pack of any one of claims 1 to 13, wherein the battery management system is communicatively connected to the sensor (8) of the thermal safety battery pack and is control-connected to the liquid cooling mechanism (9) of the thermal safety battery pack.

15. An electrical device, comprising an electrical body and the thermal safety battery pack of any one of claims 1 to 13, wherein the electrical body comprises a vehicle.
